# EUROPEAN PATENT APPLICATION

(11) **EP 4 744 979 A1**
(43) Date of publication of application: **20.05.2026**
(21) Application number: 25205324.4
(22) Date of filing: 29.09.2025
(51) Int. Cl.: B60T 7/04, B60T 11/21, G05G 1/30

(54) **PEDAL ASSEMBLY FOR A VEHICLE**

(30) Priority: 13.11.2024 IN 202421087404
(71) Applicant: Deere & Company, Moline, IL 61265 (US)
(72) Inventor: Wagh, Sushant, Pune, Maharashtra (IN); Shah, Nishant, Pune, Maharashtra (IN); Thakare, Rupesh, Pune, Maharashtra (IN)
(74) Representative: Dehnhardt, Florian Christopher

(57) **Abstract**

A pedal assembly for a vehicle, having a first pedal (14) and a second pedal (18), a latch (22) for coupling and decoupling the first pedal (14) and the second pedal (18), a latch support member (24) acting a pivot point for the latch (22) to move between a first position and a second position, a resilient member (26) attached between the first pedal (14) and the latch (22). The resilient member (26) is configured to retain the latch (22) in one of the first position and the second position. The latch (22) is actuated externally to achieve coupling and decoupling of the first pedal (14) and the second pedal (18) against the tension from the resilient member (26).

## Description

The present invention relates to a pedal assembly of a vehicle and more particularly relates to a latch and a resilient member arrangement of the pedal assembly.

In general, vehicle operations are controlled by human operators through control levers and pedals. These levers and pedals are used to control various vehicle operations like brake control, clutch control, steering control, accelerator control and other auxiliary vehicle operations & components.

For certain type of vehicle operations, we require actuation of two pedals to get the desired outcome. For example, braking operation in an agricultural tractor requires two separate pedals for actuating the left-side wheel brake and right-side wheel brake. These two brake pedals are required to be actuated individually when the tractor is turning. During road travel, when the tractor is not required to turn, the two brake pedals need to be actuated together to get desired braking.

Currently, the left-side brake pedal and the right-side brake pedal are interlocked by a latch. This latch is prone to displace its intended position during certain tractor operations where the vibrations are more. It is desired to have a latch mechanism, which remains in its intended position until externally actuated by the operator.

The present invention is expected to achieve at least one of the following objects, thereby overcoming the drawbacks of prior art:
An object of the present invention is to provide an improved latch mechanism with a resilient member to couple and decouple the left-side and right-side pedals.

Another object of the present invention is to provide an improved dual pedal assembly for operating desired vehicle operations.

Other objects of the present invention will be apparent when the description of the invention is read in conjunction with the accompanying drawings. The accompanying drawings provided herein are merely illustrative and are not intended to limit the scope and ambit of the present invention.

In accordance with an aspect of the present invention there is provided a pedal assembly for a vehicle having a first pedal, a second pedal for controlling the vehicle operation, a latch for coupling and decoupling the first pedal and the second pedal, a latch support member, a resilient member to retain the latch in its resting position.

According to an aspect of the present invention, the latch is attached to the first pedal by the latch support member. The latch is configured to pivot between a first position and a second position with the said latch support member as pivoting point.

According to an aspect of the present invention, the resilient member is attached to the first pedal by a first resilient member support means and the resilient member is attached to the latch by a second resilient member support means. The resilient member is configured to retain the latch in one of the first position and the second position.

According to an aspect of the present invention, the latch upon actuation by an external means, configured to displace between the first position and the second position overcoming the tension of the resilient member.

According to an aspect of the present invention, the pedal assembly is used to actuate one of a brake control mechanism, a clutch control mechanism, an accelerator control mechanism, and a steering control mechanism.

According to an aspect of the present invention, the latch of the pedal assembly is actuated by one of an operator hand, an operator foot, an electric actuating means, and a cable actuating means.

The above and various features, aspects will become apparent from the following detailed description of the invention and accompanying drawings.

The detailed description refers to the accompanying figures in which:
- Figure 1: illustrates a complete pedal assembly of a vehicle, in accordance with the present invention,
- Figure 2: illustrates a rear perspective of the first pedal and the second pedal in coupled condition with resilient member in rest, in accordance with the present invention,
- Figure 3: illustrates a rear perspective of two pedals in decoupled condition with resilient member in tension, in accordance with the present invention, and
- Figure 4: particularly illustrates a rear perspective of two pedals in decoupled condition with resilient member in rest, in accordance with the present invention.

Like reference numerals are used to indicate like elements throughout the several figures.

The embodiments or implementations disclosed in the above drawings and the following detailed description are not intended to be exhaustive or to limit the present disclosure to these embodiments or implementations.

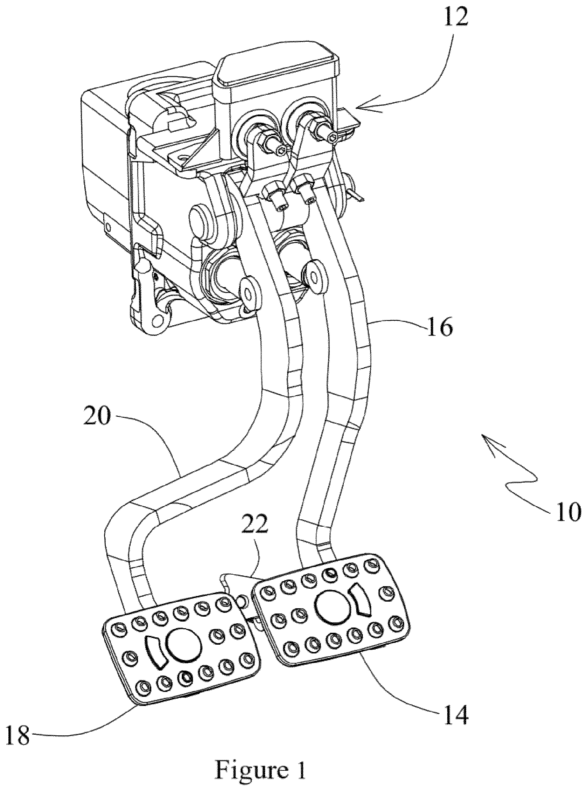

Figure 1 illustrates a pedal assembly 10 consist of a first pedal 14, second pedal 18, a pedal housing 12. The first pedal 14 is connected to the pedal housing 12 through a first pedal arm 16 and the second pedal 18 is connected to the pedal housing 12 through a second pedal arm 20. The first pedal 14 and the second pedal 18 are coupled through a latch 22. The pedal assembly 10 is part of an agricultural tractor for operating braking operation. The pedal assembly 10, without limitation can also be used in other vehicles. The pedal assembly 10 can control vehicle operations like brake control, clutch control, steering control, accelerator control and other vehicle operations and/or controls.

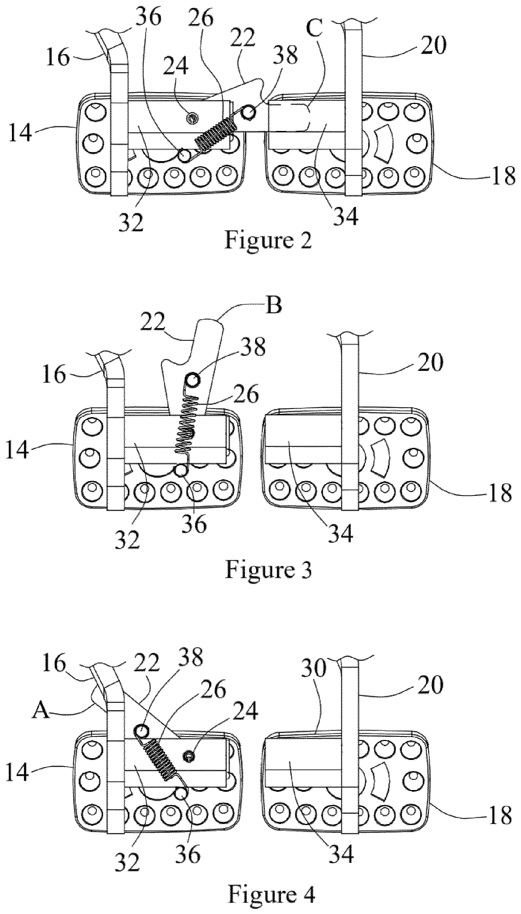

Figure 2 illustrates a rear perspective of the first pedal 14 and the second pedal 18. The latch 22 is attached to the first pedal 14 through a latch support member 24. The latch support member 24 acts a pivot point for the latch 22 to displace between a first position A and a second position C. A resilient member 26 is configured to retain the latch 22 in one of the first position A and the second position C. One end of the resilient member 26 is attached to the first pedal 14 through a first resilient member support means 36 and other end of the resilient member is attached to the latch 22 through a second resilient member support means 38.

Upon external actuation, the latch 22 is displaceable between the first position A and the second position C, overcoming the tension of the resilient member 26. The first pedal 14 and the second pedal 18 are coupled, when the latch 22 is in the second position C. In this coupled condition, the first pedal 14 and the second pedal 18 displaces its position together when the operator presses one of the first pedal 14 and the second pedal 18. The latch 22 is supported by a first latch resting member 32, when the latch 22 is in first position A. The latch 22 is supported by a second latch resting member 34, when the latch 22 is in second position C. The first latch resting member 32 is configured to restrict the downward movement of the latch 22 from its first position A. The second latch resting member 34 is configured to restrict the downward movement of the latch 22 from its second position C. The second latch resting member 34 is further configured to hold the latch 22 to couple the first pedal 14 and the second pedal 18.

The resilient member 26 is configured to provide support to the latch 22 to rest in one of the first position A and the second position C. Due to the tension of the resilient member 26, the latch 22 is rested in one of the first position A and the second position C. During tractor operation in the rough field conditions, the latch 22 vibrates, however the tension of the resilient member 26 retains the latch 22 in its original state. As illustrated in Figure 2, 3 and 4, the latch 22 is configured to pivot between the first position A and the second position C upon external actuation of the latch 22. The latch 22 displaces its position from the first position A to the second position C by passing through a third position B. When the latch 22 is in the third position B, the resilient member 26 is at maximum tension and it pulls the latch 22 to one of the first position A and the second position C.

External actuation is required to move the latch 22 from first position A to second position C or vice versa. The actuation of the latch 22 can be by an operator hand, an operator foot, an electric actuating means, and a cable actuating means.

In another embodiment without deviating from the scope of the invention, the latch 22 can be used for coupling and decoupling levers, handlebars, and other operator control means for controlling the vehicle operations.

In another embodiment without deviating from the scope of the invention, the latch 22, the latch support member 24, the resilient member 26, the first resilient member support means 36 is attached to the second pedal 18 (not shown).

In another embodiment without deviating from the scope of the invention, the latch 22 and the resilient member 26 is arranged as part of the first pedal arm 16 and the second pedal arm 20 to couple and decouple the first pedal 14 and second pedal 18. In this arrangement, the first latch resting member 32 and the second latch resting member 34 are part of the first pedal arm 16 and the second pedal arm 20 respectively.

In another embodiment without deviating from the scope of the invention, the one end of the resilient member 26 is attached to one of the first pedal 14, the second pedal 18, the first pedal arm 16, the second pedal arm 20 and the other end of the resilient member 26 is attached to the latch 22.

The present invention has several technical advancements, including but not limited to the realization of avoiding undesired pedal actuations and reducing operator discomfort for repeatedly adjusting the desired latch position.

## Claims

1. Pedal assembly for a vehicle comprising a first pedal (14), a second pedal (18), a latch (22) pivotally attached to a latch support member (24), wherein the latch (22) is configured to pivot between a first position (A) and a second position (C) and a resilient member (26) is provided and configured, to retain the latch (22) in one of the first position (A) and the second position (C).

2. The pedal assembly according to claim 1, **characterized in that** the latch support (24) member is mounted on one of the first pedal (14) and the second pedal (18).

3. The pedal assembly according to claim 1 or 2, **characterized in that** the first pedal (14) and the second pedal (18) are used for actuating one of a brake control mechanism, a clutch control mechanism, an accelerator control mechanism, and a steering control mechanism.

4. The pedal assembly according to at least one of claims 1 to 3, **characterized in that** the latch (22) is configured to displace its position on actuation of the latch (22).

5. The pedal assembly according to claim 5, **characterized in that** the latch (22) is actuated by one of an operator hand, an operator foot, an electric actuating means, and a cable actuating means.

6. The pedal assembly according to at least one of claims 1 to 5, **characterized in that** the latch (22) is resting in the first position (A) by a first latch resting member (32) attached to the first pedal (14).

7. The pedal assembly according to at least one of claims 1 to 6, **characterized in that** the latch (22) is resting in the second position (C) by a second latch resting member (34) attached to the second pedal (18).

8. The pedal assembly according to at least one of claims 1 to 7, **characterized in that** the first pedal (14) and the second pedal (18) are locked when the latch (22) is resting in the second position (C).

9. The pedal assembly according to at least one of claims 1 to 8, **characterized in that** the latch support member (24) is attached to the first pedal (14).

10. The pedal assembly according to at least one of claims 1 to 5, **characterized in that** the resilient member (26) is attached to the first pedal (14) by a first resilient member support means (36).
